# EUROPÄISCHE PATENTSCHRIFT

(11) **EP 1 657 171 B1**
(45) Veröffentlichungstag und Bekanntmachung des Hinweises auf die Patenterteilung: **31.12.2008**
(21) Anmeldenummer: 05024186.8
(22) Anmeldetag: 07.11.2005
(51) Int. Cl.: B65D 25/00, B65D 6/16, B65D 21/032, B65D 21/02

(54) **Lager-, Transport-, Stapel- und Kommissionierbehälter**
Storage-, transport-, stackable- and order-picking-container
Conteneur empilable pour le transport, stockage et préparation de commandes

(30) Priorität: 16.11.2004 DE 202004017786 U; 14.10.2005 DE 202005016115 U
(43) Veröffentlichungstag der Anmeldung: 17.05.2006
(73) Patentinhaber: Fritz Schäfer GmbH, 57290 Neunkirchen (DE)
(72) Erfinder: Schäfer, Gerhard, 57290 Neunkirchen (DE)
(74) Vertreter: Grosse, Wolf-Dietrich Rüdiger

(56) Entgegenhaltungen:
- EP-A- 0 931 727
- DE-A1- 3 104 279
- FR-A- 2 810 963
- US-A- 2 528 551
- US-A- 3 840 115
- US-A- 4 759 451
- US-A- 5 605 246
- US-A- 5 632 392
- US-B1- 6 601 724

## Beschreibung

Die Erfindung betrifft einen Lager-, Transport-, Stapel- und Kommissionierbehälter, gemäß dem Oberbegriff des Anspruchs 1, mit einem Boden und vier Seitenwänden, von denen zumindest die eine der beiden Stirnwände als bewegliches Element ausgeführt ist, wobei der Behälter mit Stapeldruckübertragungs- und Nestkonturen ausgebildet ist und konische Innenstege sowie von den Innenstegen begrenzte Einschubkanäle aufweist.

Um großes Inhaltsgut zu lagern, werden im Stand der Technik stapelbare Transportbehälter mit entsprechend großen Abmaßen angeboten, bei welchen in den Seitenwänden eine um eine horizontale Achse drehbare Klappe vorgesehen ist, die ein Be- und Entladen von Inhaltsgut ermöglichen soll. Die Drehklappe ist mit einem Einsatzteil drehbar verbunden, welches in einem entsprechenden Einschnitt in der Seitenwand befestigt ist. Ein solcher Behälter ist aus der EP-A-0 876 963 bekannt.

Ein Be- und Entladen von Inhaltsgut ist jedoch insbesondere bei großflächigem Inhaltsgut bei diesen Behältern unmöglich, d. h. die Behälter müssen aus den Regalen herausgenommen und das Inhaltsgut muss von oben entnommen werden. Dies ist sehr umständlich, zeitraubend und kostenintensiv. Außerdem sind diese Behälter insbesondere durch ihre großvolumigen, vorrangig rechteckigen Abmaße nicht hochregal- sowie rollenbahntauglich. Des weiteren sind die bekannten Behälter mit geraden, senkrechten Seitenwänden ausgestattet und können daher nicht als platzsparendes Leergut transportier werden. Hierzu werden dann konische Drehstapelbehälter empfohlen.

Zum Ineinanderstapeln oder Übereinanderstapeln von Behältern ist durch die US-A-3 840 115 ein einstückig aus Kunststoff mit starren Wänden hergestellter Behälter bekannt geworden. Dieser besitzt an allen Wänden nach innen versetzte Verstärkungsstege, die nach oben hin konisch, sich verjüngend verlaufen, mit Abstand unterhalb des Behälter-Oberrandes enden und zwischen sich Einschubkanäle für einen einzustapelnden Behälter begrenzen. Zur Übereinanderstapelung von Behältern weist dieser Behälter in seinen Eckbereichen durch Scharniere bzw. Filmscharniere mit den angrenzenden Behälterwänden und untereinander verbundene Kragteile auf. Diese müssen zum Übereinanderstapeln von Behältern von Hand in den Innenraum des jeweils unteren Behälters umgestellt bzw. eingeschwenkt werden. Auf die Oberkanten dieser Schwenkwand- bzw. Kragteile setzt sich dann der obere Behälter auf. Zum Ineinanderstapeln müssen diese Kragwandteile dann wieder in ihre Ausgangsposition zurückgeschwenkt werden, weil ansonsten ein oberer Behälter nicht in den unteren Behälter eintauchen könnte. Bei diesem einstückig starren Behälter ist eine Entnahme des Inhaltsguts nur nach oben hin möglich.

Ein Behälter, der eine Entnahme des Inhaltsguts von der Stirnseite her ermöglicht, wozu er eine bewegliche Entnahmewand besitzt, ist aus der US-A-2 528 551 bekannt geworden. Allerdings wird die Entnahme des Inhaltsguts durch eine unvermeidliche bodenseitige Störkante stark beeinträchtigt.

Allgemein bekannt ist jedoch die Tatsache, daß nestbare oder teilnestbare, d.h. ineinander stapelbare oder im Kreuzverband nach dem Drehstapelprinzip übereinander stapelbare Behälter nur insoweit ineinander schachtelbar sind, was somit für ineinander stapelbare, konische Behälter gilt, wie eine Schrägstellung der Seitenwand die eigentliche Wandstärke dieser Seitenwand beim Nesten gegenüber der Senkrechten freimacht, da ansonsten ein Klemmeffekt entstehen würde.

Die Konizität der Seitenwände erlaubt jedoch keine großdimensionierten Profile oder Wandstärken, so daß keine ausreichende Stabilisierung der Behälterwände gegeben ist. Dies ist, insbesondere bei schwerem Inhaltsgut und entsprechend hohen Auflast, ein gravierender Nachteil. Das Drehstapelprinzip, mit gegeneinander versetzten Flächen, ergibt ein holmähnliches bzw. versicktes Profil, welches eine ausreichende Steifigkeit gegen Ausknicken der Wandungen bei Stauchdruck bzw. Auflast erreicht. Um jedoch eine maximale Beladungs- und Entleerungsöffnung zu erhalten, wird dieses statische Gebilde als Gesamtes wieder zerstört und kann im Auflastfall den Anforderungen nicht standhalten.

Die Behälter müssen unter anderem auch großvolumiges Inhaltsgut (z. B. Kabelbäume, Kabelkanäle etc.) aufnehmen können. Des weiteren müssen die Behälter mit Inhaltsgut in Hochregallager etc. eingelagert und nach einem produktionssynchronen Abruf wieder ausgelagert werden können.

Nach Auslagerung muß die Möglichkeit bestehen, daß die Behälter in Transportwagen oder in offenen Regalen direkt in der Produktionsstätte bzw. Einbaustelle des Inhaltsgutes umgelagert werden können, z. B. manuell oder mit einem Handlingsgerät, welches am Transportwagen oder Regal andockt und das Inhaltsgut auf ein Transportblech oder ähnliches zieht. Außerdem wird für den Leertransport eine größtmögliche Volumenreduzierung angestrebt, was insbesondere von der Kontur her konische Behälter ermöglichen.

Der Erfindung liegt daher die Aufgabe zugrunde, einen volumenreduzierbaren Lager-, Transport-, Stapel- und Kommissionierbehälter mit hoher Auflastfähigkeit zu schaffen, der insbesondere außerdem eine maximal große und ohne Störkanten versehene, verschließbare Entnahmeöffnung aufweist.

Diese Aufgabe wird erfindungsgemäß durch die im kennzeichnenden Teil des Anspruchs 1 angegebenen Merkmalen gelöst, die eine Verbundwand ermöglichen, wobei bei einem Rechteckkasten einerseits vorzugsweise zumindest die eine der beiden Stirnwände beweglich ist, z.B. bodenseitig anscharniert oder insgesamt abnehmbar, und somit nach dem Wegklappen oder Entfernen eine große oder völlig frei zugängliche Öffnung zum Behälterinnern bereitstellt, und die andererseits integriert in den Kopfenden der Innenstege sogleich auch Konturen (Eckausnehmungen, Vertiefungen oder dergl.) zur Übereinanderstapelung nach dem Dreh- und Kreuzstapelprinzip besitzt. Die kompakte, stabile Verbundwand ist - nach dem Verriegeln mit den Längswänden - in der Lage, einen sehr großen Stapeldruck aufzunehmen. Es besteht somit die Möglichkeit, die erfindungsgemäßen Behälter mehrfach übereinander gestapelt zu transportieren oder sie, durch die Konizität bzw. den Stapelrand an den Behältern, im Leer- bzw. Rücktransport platzsparend zu nesten.

Hierbei tragen die Innenstege mit dem nur einen Mittelblock außerdem dazu bei, daß sich beim platzsparenden Leertransport von ineinander gestapelten konischen Behältern durch die in die Einschubkanäle des jeweils unteren Behälters einführbaren Außenstege des eingestapelten, oberen Behälters ein formschlüssiger, stabiler Stapelverbund erreichen lässt.

Die Stirnwand ist vorzugsweise komplett zu öffnen, um schweres, großvolumiges Inhaltsgut ohne Anheben einlagern bzw. entnehmen zu können. Sie kann im Bodenbereich durch eine Schwenkachse, ein Scharnier, welches wahlweise zur zusätzlichen Stabilisierung mit einem Steckbolzen versehen werden kann, oder ähnliches beweglich mit dem Behälter verbunden werden. Alternativ läßt sich die Stirnwand ganz entnehmbar, d, h. lösbar von den angrenzenden Seltenwänden ausbilden.

Beim durch klappenartiges Verschwenken oder Entfernen der Stirnwand geöffneten Zustand der Behälterseite läßt sich eine Komrnlssionleröffnung erreichen, aus der das Inhaltsgut auf einfache Weise und ohne einschränkende Störkonturen eingeladen bzw. entnommen werden kann, insbesondere wenn bei großvolumigem Inhaltsgut die Seitenwand vollständig geöffnet oder abgenommen wird. Die die Kommissionieröffnung ermöglichende Stirnwand wird hierbei zur Sicherung des Inhaltsgutes sowie zur zusätzlichen Stabilisierung des Behälters verriegelbar ausgeführt, ohne daß an diesen Verriegelungen die Produkte bei Beladung oder bei Entnahme hängen bleiben.

Vorzugsweise werden Griffaufnahmen und/oder Unterfassgriffe für den manuellen Transport eingearbeitet. Aufnahmen für Warenanhänger sowie für Transponder garantieren auch in Hochregalen einen großen Leseabstand.

Die vorteilhaften, konturierten Verzahnungen an den Jeweiligen Seiten bzw. Stirnkanten der Behälterwände greifen beim Verschließen nach Art eines Reißverschlusses leichtgängig formschlüssig ineinander und gewährleisten auch beim Übereinanderstapeln der Behälter mit schwerem Inhaltsgut einen sicheren Verbund.

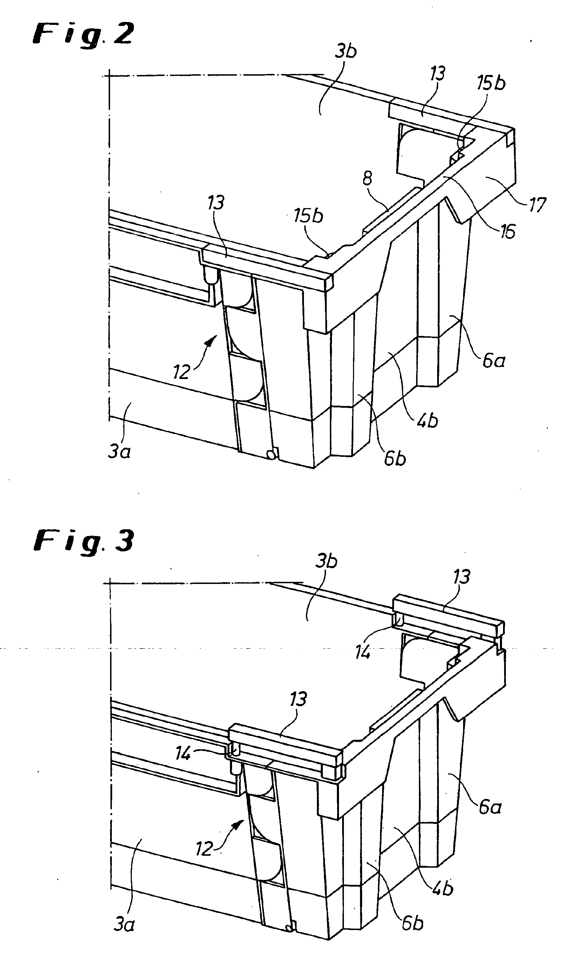

Zusätzlich werden die Behälter im geschlossenen Zustand durch Verriegelungen, welche in die Im Behälter entsprechend eingebrachten Aufnahmen eingreifen bzw. einrasten, fixiert bzw. gesichert (siehe Figur 2).

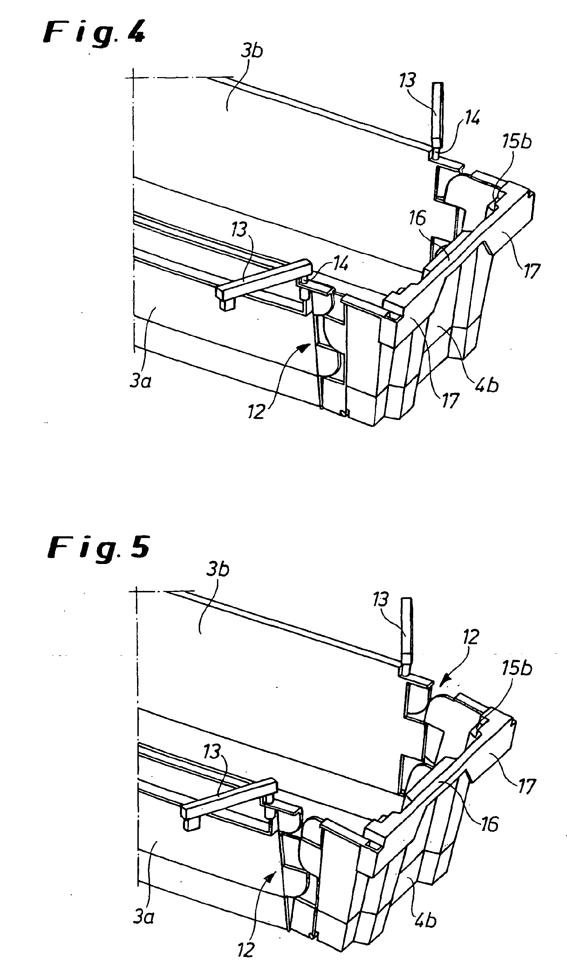

Zur Entnahme des Inhaltsgutes bzw. zur Beladung der Behälter werden die Verriegelungen angehoben und nach außen gedreht (siehe Figuren 3 und 4).

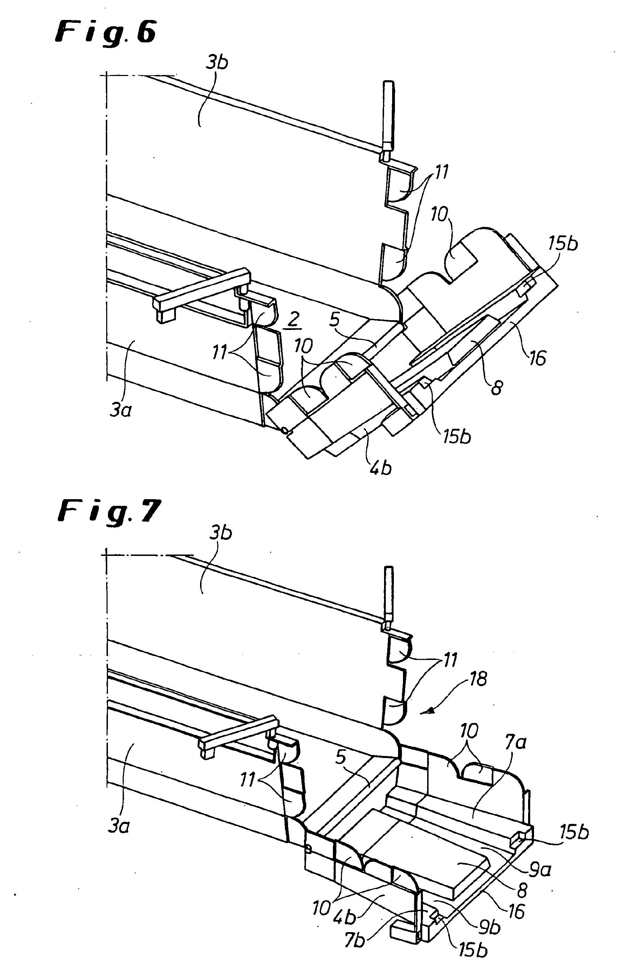

Die entnahmeseltige Stirn- bzw. Behälterwand lässt sich Jetzt an den jewells im oberen Bereich eingebrachten Griffen nach vorne ziehen und gänzlich öffnen (siehe Figuren 5 und 6).

Im vollständig geöffneten Zustand steht die Behälter- bzw. Stirnwand, welche durch die im Bodenbereich eingebrachte Schwenkachse, Scharnier oder ähnliches mit dem Behälter fest verankert bleibt, zumindest waagerecht nach vorne (siehe Figur 7) bzw. wird um mehr als 90° aufgeschwenkt oder sie läßt sich völlig entfernen, wenn sie mit den benachbarten Behälterwänden einrastbar oder dergleichen ausgebildet Ist. Das Inhaltsgut kann in jedem Fall problemlos entnommen oder eingelagert werden.

Nach Entleerung bzw. Beladung kann der Behälter In umgekehrter Reihenfolge wieder verschlossen werden.

Weitere Merkmale und Einzelheiten der Erfindung ergeben sich aus den Ansprüchen und der nachfolgenden Beschreibung eines in den Zeichnungen dargestellten Ausführungsbeispiels. Es zeigen:
- Fig. 1: in einer perspektivischen Gesamt-Draufsicht einen im Ausführungsbeispiel rechteckigen Behälter im geschlossenen Zustand, d.h. mit verrlegelter Stirnwand:
- Fig. 2: eine perspektivische Teilansicht des Behälters -> Stirnwand geschlossen;
- Fig. 3: eine perspektivische Teilansicht des Behälters -> Verriegelung etwas angehoben;
- Figl 4: eine perspektivische Teilansicht des Behälters -> Stirnwand entriegelt;
- Fig. 5: eine perspektivische Teilansicht des Behälters -> Stirnwand etwas geöffnet;
- Fig. 6: eine perspektivische Teilansicht des Behälters -> Stirnwand geöffnet bis etwa zur Hälfte; und
- Fig. 7: eine perspektivische Teilansicht des Behälters -> Stirnwand vollständig geöffnet.

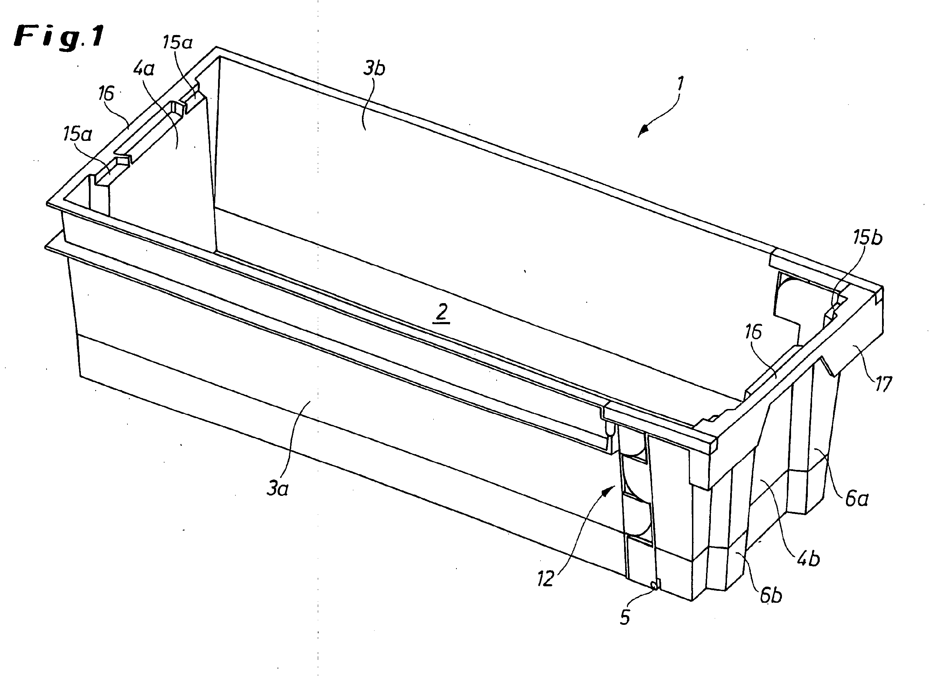

Ein in Fig. 1 Insgesamt dargestellter, hier rechteckiger und konischer Behälter 1 besteht aus einem Boden 2 mit vier Seitenwänden, und zwar den beiden Längswänden 3 a, 3 b sowie den beiden Stirnwänden 4 a, 4 b, von denen die rechte Stirnwand 4 b über Scharniere 5 am Boden 2 als schwenkbewegliches Element ausgebildet ist. Alternativ könnte dieses Wandelement mit den angrenzenden bzw. benachbarten Längswänden 3 a, 3 b nur lösbar verrastet sein und wäre damit entfernbar von dem Behälter 1.

Die Stirnwand 4 b ist als stabile Verbundwand mit einerseits an ihrer Außenseite vorgesehenen, von oben nach unten konischen, blockartigen Außenwandstegen 6 a, 6 b, ausgebildet als äußere Holmproflle, und andererseits an Ihrer Innenseite vorgesehenen, äußeren Innenstegen 7 a, 7 b, ausgebildet als innere Holmprofile sowie einem Mlttelblock 8, der von den Innenstegen 7 a, 7 b mit zu den Außenwandstegen 6 a, 6 b komplementären, konischen Einschubkanälen 9 a, 9 b beabstandet Ist, sowie widerstandsfähigen Verrastungen mit den Längswänden 3 a, 3 b ausgebildet (vgl. Fig. 7). Beim Ineinanderstapeln leerer Behälter 1 tauchen die Außenwandstege 6 a, 6 b in die Einschubkanäle 9 a, 9 b zwischen dem Mittelblock 8 und den Innenstegen 7 a, 7 b ein.

Bei stirnseitig geschlossenem Behälter 1 (vgl. Fig. 1 bis 3) ist die Stirnwand 4 b mit an ihren Seitenkanten ausgeblldeten Rastmitteln 10 und gegenüberliegend an den Stirnkanten der Längswände 3 a, 3 b ausgebildeten, komplementären Rastmitteln 11 (vgl. die Fig. 6 und 7) über eine Art von Verzahnungseingriff 12 (vgl. Fig. 1 bis 3), der aus sichelartig bzw. bogenförmig konturierten, reißverschlußartig ineinandergreifenden kleinen Zähnen besteht, in ihrer aufgerichteten Position formschlüssig festgelegt. Zur Lagesicherung dienen weiterhin heb- bzw, senkbare und verschwenkbare Riegel 13, die mit Zapfen 14 In den Längswänden 3 a, 3 b gelagert und mit Ihren anderen Enden in die Stirnwand 4 b einrastbar sind (vgl. die Fig. 2 bis 5).

Um beim Übereinanderstapeln beladener, schwerer Behälter 1 die hohen Auflagerkräfte noch besser aufnehmen zu können, sind an dem durch eine Schürze 17, die gleichzeitig einen Handgriff bzw. Unterfassgriff bereitstellt, verstärkten Oberrand 16 sowohl der schwenkbaren bzw. entfernbaren Stirnwand 4 b als auch an der gegenüberllegenden Stirnwand 4 a in Form von Ausnehmungen mehrere Stapeldruckübertragungs- und Nestkonturen 15 a, 15 b ausgebildet. Im Ausführungsbeispiel sind diese bei der schwenkbaren Stirnwand 4 b am Kopfende der Innenstege 7 a, 7 b (vgl. Fig, 7) und übergehend In einen ununterbrochenen, durchgehenden Obersteg des Oberrandes 16 vorgesehen, der eingearbeitete Teilkonturen der Stapeldruckübertragungs- und Nestkonturen 15a, 15b aufweist. Die Stapeldruckübertragungs- und Nestkonturen 15 a, 15 b bieten außerdem beim Ineinanderstapeln leerer Behälter eine lagesichernde Positionierauflage und Abstützung.

Wenn für den Behälter 1 hingegen eine große, frei zugängliche, stirnseitige Entnahmeöffnung 18 geschaffen werden soll, wie In Fig. 7 dargestellt, brauchen nur die Riegel 13 angehoben (Fig. 3), um ihre Zapfen 14 verschwenkt sowie die Verzahnungseingriffe 12 von Stirnwand 4 b und Längswänden 3 a, 3 b durch beispielsweise Ziehen an der Schürze 17 gelöst und die Stirnwand 4 b um das Scharnier 5 weggeklappt bzw. verschwenkt zu werden, wie das der Abfolge der Figuren 2 bis 7 zu entnehmen ist.

## Patentansprüche

1. Lager-, Transport-, Stapel- und Kommissionierbehälter (1) mit einem Boden (2) und vier Seitenwänden (3a, 3b; 4a, 4b), von denen zumindest die eine der beiden Stirnwände (4b) als bewegliches Element ausgeführt ist, wobei der Behälter (1) mit Stapeldruckübertragungs- und Nestkonturen (15a, 15b) ausgebildet ist und konische Innenstege (7a, 7b) sowie von den Innenstegen (7a, 7b) gegrenzte Einschubkanäle (9a, 9b) aufweist,
**dadurch gekennzeichnet,**
**dass** die Stapeldruckübertragungs- und Nestkonturen (15b) der beweglichen Stirnwand (4b) im Kopfende von seitlichen, blockartigen Innenstegen (7a, 7b) angeordnet sind und zwischen den Innenstegen (7a, 7b) und einem sich nach oben hin konisch verjüngenden Mittelblock (8) der Stirnwand (4b) die konischen Einschubkanäle (9a, 9b) ausgebildet sind.

2. Behälter nach Anspruch 1,
**dadurch gekennzeichnet,**
**dass** die die Stapeldruckübertragungs- und Nestkonturen (15b) aufweisende, bewegliche Stirnwand (4b) formschlüssig mit den übrigen Behälterwänden (3a, 3b) verriegelbar ist.

3. Behälter nach Anspruch 1 oder 2,
**dadurch gekennzeichnet,**
**dass** die bewegliche Stirnwand (4b) über einen reißverschlußartigen Verzahnungseingriff (12) mit den Behälterwänden (3a, 3b) verrastbar ist.

4. Behälter nach einem der Ansprüche 1 bis 3,
**dadurch gekennzeichnet,**
**dass** die Stapeldruckübertragungs- und Nestkonturen (15a, 15b) in mehreren Koordinatenebenen vorgesehen sind.

5. Behälter nach einem der Ansprüche 1 bis 4,
**gekennzeichnet durch**
an der Außenseite der Stirnwand (4b) fluchtend zu den Innenstegen (7a, 7b) vorgesehene, blockartige Außenstege (6a, 6b).

6. Behälter nach einem der Ansprüche 1 bis 5,
**dadurch gekennzeichnet,**
**dass** die Stapeldruckübertragungs- und Nestkonturen (15a, 15b) bis in einen durchgehenden Steg des Oberrahmens (16) der Stirnwand (4b) übergehen.

7. Behälter nach einem der Ansprüche 1 bis 6,
**dadurch gekennzeichnet,**
**dass** die Stirnwand (4b) schwenkbar an den übrigen Behälterwänden (3a, 3b) angeordnet ist.

8. Behälter nach Anspruch 7,
**dadurch gekennzeichnet,**
**dass** die Stirnwand (4b) am Boden (2) schwenkbar befestigt ist.

9. Behälter nach einem der Ansprüche 1 bis 8,
**dadurch gekennzeichnet,**
**dass** die Stirnwand (4b) durch Riegel (13) mit den beiden benachbarten Behälterwänden (3a, 3b) verbunden ist.

10. Behälter nach einem der Ansprüche 1 bis 9,
**dadurch gekennzeichnet,**
**dass** die Stirnwand (4b) durch Steckverbindungen mit den beiden benachbarten Behälterwänden (3a, 3b) verbunden ist.

## Claims

1. A storage, shipping, stacking and commissioning container (1) having a bottom (2) and four side walls (3a, 3b; 4a, 4b), at least one of the two end walls (4b) thereof being designed as a movable element, whereby the container (1) is designed with stacking-pressure-transmitting contours and nesting contours (15a, 15b) and has conical inside webs (7a, 7b) as well as insertion channels (9a, 9b) which border the inside webs (7a, 7b),
**characterized in that**
the stacking-pressure-transmitting contours and nesting contours (15b) of the movable end wall (4b) are arranged in the head end of lateral block-like inside webs (7a, 7b) and the conical insertion channels (9a, 9b) are formed between the inside webs (7a, 7b) and a central block (8) of the end wall (4b) tapering conically toward the top.

2. The container according to Claim 1,
**characterized in that**
the movable end wall (4b) having stacking-pressure-transmitting contours and nesting contours (15b) is lockable in a form-fitting manner with the other container walls (3a, 3b).

3. The container according to Claim 1 or 2,
**characterized in that**
the movable end wall (4b) is lockable to the container walls (3a, 3b) via a toothed engagement (12) in the manner of a hook-and-loop closure.

4. The container according to any one of Claims 1 to 3,
**characterized in that**
the stacking-pressure-transmitting contours and nesting contours (15a, 15b) are provided in multiple coordinate planes.

5. The container according to any one of Claims 1 to 4,
**characterized by**
block-like outer webs (6a, 6b) provided on the outside of the end wall (4b) aligned with the inside webs (7a, 7b).

6. The container according to any one of Claims 1 to 5,
**characterized in that**
the stacking-pressure-transmitting contours and nesting contours (15a, 15b) develop into a continuous web of the upper frame (16) of the end wall (4b).

7. The container according to any one of Claims 1 to 6,
**characterized in that**
the end wall (4b) is arranged pivotably on the other container walls (3a, 3b).

8. The container according to Claims 7,
**characterized in that**
the end wall (4b) is pivotably mounted on the bottom (2).

9. The container according to any one of Claims 1 to 8,
**characterized in that**
the end wall (4b) is connected by latches (13) to the two neighboring container walls (3a, 3b).

10. The container according to any one of Claims 1 to 9,
**characterized in that**
the end wall (4b) is connected to the two neighboring container walls (3a, 3b) by plug connections.

## Revendications

1. Conteneur de stockage, de transport, d'empilage et de préparation des commandes (1) avec un fond (2) et quatre parois latérales (3a, 3b ; 4a, 4b), dont au moins l'une des deux parois frontales (4b) est réalisée sous la forme d'un élément mobile, le conteneur (1) étant réalisé avec des contours transmetteurs de la pression d'empilage et contours d'emboîtement (15a, 15b) et comportant des listels intérieurs coniques (7a, 7b) ainsi que des canaux d'insertion (9a, 9b) délimités par rapport aux listels intérieurs (7a, 7b),
**caractérisé en ce que**,
les contours transmetteurs de la pression d'empilage et contours d'emboîtement (15b) de la paroi latérale mobile (4b) sont disposés dans l'extrémité de tête de listels intérieurs (7a, 7b) latéraux de type blocs, et **en ce que** les canaux d'insertion coniques (9a, 9b) sont réalisés entre les listels intérieurs (7a, 7b) et un bloc central (8) se rétrécissant sous forme conique vers le haut de la paroi frontale (4b).

2. Conteneur selon la revendication 1,
**caractérisé en ce que**,
la paroi frontale mobile (4b) comportant les contours transmetteurs de la pression d'empilage et contours d'emboîtement (15b) est susceptible de se verrouiller par complémentarité de forme avec les autres parois du conteneur (3a, 3b).

3. Conteneur selon la revendication 1 ou 2,
**caractérisé en ce que**,
la paroi frontale mobile (4b) est susceptible de s'enclencher par l'intermédiaire d'un engagement par dentures de type fermeture éclair (12) dans les parois du conteneur (3a, 3b).

4. Conteneur selon l'une quelconque des revendications 1 à 3,
**caractérisé en ce que**,
les contours transmetteurs de la pression d'empilage et contours d'emboîtement (15a, 15b) sont prévus sur plusieurs niveaux de coordonnées.

5. Conteneur selon l'une quelconque des revendications 1 à 4,
**caractérisé par**
des listels extérieurs (6a, 6b) de type blocs, prévus en alignement sur les listels intérieurs (7a, 7b), sur la face extérieure de la paroi frontale (4b).

6. Conteneur selon l'une quelconque des revendications 1 à 5,
**caractérisé en ce que**,
les contours transmetteurs de la pression d'empilage et contours d'emboîtement (15a, 15b) passent jusque dans un listel continu du cadre supérieur (16) de la paroi frontale (4b).

7. Conteneur selon l'une quelconque des revendications 1 à 6,
**caractérisé en ce que**,
la paroi frontale (4b) est disposée de façon à pouvoir pivoter sur les autres parois du conteneur (3a, 3b).

8. Conteneur selon la revendication 7,
**caractérisé en ce que**,
la paroi frontale (4b) est fixée de façon à pouvoir pivoter sur le fond (2).

9. Conteneur selon l'une quelconque des revendications 1 à 8,
**caractérisé en ce que**,
la paroi frontale (4b) est reliée par des verrous (13) avec les deux parois de conteneur (3a, 3b) voisines.

10. Conteneur selon l'une quelconque des revendications 1 à 9,
**caractérisé en ce que**,
la paroi frontale (4b) est reliée par assemblages par enfichage avec les deux parois de conteneur (3a, 3b) voisines.
